# EUROPÄISCHE PATENTSCHRIFT

(11) **EP 0 993 935 B1**
(45) Veröffentlichungstag und Bekanntmachung des Hinweises auf die Patenterteilung: **26.03.2008**
(21) Anmeldenummer: 99120455.3
(22) Anmeldetag: 14.10.1999
(51) Int. Cl.: B32B 5/18, B32B 5/24, B32B 27/12, B32B 38/18, B60R 13/02

(54) **Verfahren zur Herstellung einer Dachversteifung für Fahrzeuge und Dachversteifung**
Roof stiffener for vehicles and method of manufacturing the same
Procédé de fabrication d'un renfort de toit pour véhicules et renfort fabriqué par ce procédé

(30) Priorität: 16.10.1998 DE 19847804
(43) Veröffentlichungstag der Anmeldung: 19.04.2000
(73) Patentinhaber: Johnson Controls Headliner GmbH, 42285 Wuppertal (DE)
(72) Erfinder: Härtling, Peter, 66740 Saarlouis (DE); Königer, Uwe, 66798 Wallerfangen (DE); Bodwing, Franz-Josef, 66740 Saarlouis (DE); Louis, Denis, 66787 Wadgassen (DE)
(74) Vertreter: Patentanwälte Thömen & Körner

(56) Entgegenhaltungen:
- EP-A- 0 118 876
- EP-A- 0 276 465
- EP-A- 0 437 787
- EP-A- 0 825 066

## Beschreibung

Die Erfindung betrifft ein Verfahren zur Herstellung einer Dachversteifung für Fahrzeuge und eine nach dem Verfahren hergestellte Dachversteifung.

Aus der EP 0 825 066 A2 ist ein Verfahren zur Herstellung einer Dachversteifung für Fahrzeuge und eine nach dem Verfahren hergestellte Dachversteifung bekannt, bei der zunächst ein planes mehrschichtiges Halbzeug aus einer mittleren Hartschaumschicht und zwei äußeren Kraftlinern hergestellt, dieses anschließend mittig gespalten und eines der beiden Teile des gespaltenen Halbzeugs dann auf der freiliegenden Seite der Hartschaumschicht mit einem einzelnen Kraftliner über eine Klebeschicht verbunden wird. Ehe jedoch die Klebeschicht abbindet wird das durch den Kraftliner ergänzte Material in einem der Wölbung und Kontur der Dachhaut entsprechenden Formwerkzeug auf die endgültige Form umgeformt und in dieser Form der Klebstoff ausgehärtet. Das Umformen des mehrschichtigen Materials wird dadurch möglich, daß das gespaltene Material nur auf einer Seite einen fest mit der Schaumschicht verbundenen Kraftliner besitzt, so daß eine wesentlich geringere Steifigkeit vorliegt, als bei einer beidseitig mit Kraftlinern fest verbundenen Schaumschicht. Die Steifigkeit des im Formwerkzeug in die Kontur der Dachwölbung umgeformten Materials tritt erst dann ein, wenn auch die Klebeschicht des zusätzlichen Kraftliners unter Wärmeeinwirkung abgebunden hat.

Da beim bekannten Material bereits vor dem Umformvorgang eine Seite der Hartschaumschicht fest mit einem Kraftliner verbunden ist, ergibt sich beim Umformvorgang ein unsymmetrisches Dehnungs- und Stauchverhalten des Schaummaterials. Diese Eigenschaft beinhaltet unter Umständen die Gefahr eines nachträglichen Verzugs des Bauteils. Ferner besitzt die aus Hartschaum bestehende Schaumschicht beim bekannten Material ein relativ hohes Flächengewicht, was durch den Herstellungsprozeß auf einer Bandschäumanlage begründet ist.

Aus der DE 196 32 054 ist ein Verfahren zur Innenmontage einer Dachversteifung an der Dachhaut eines Fahrzeugs durch Verkleben der Dachversteifung mit der Dachhaut bekannt. Die Dachversteifung wird im äußeren Bereich ihrer Montagefläche mit einem ringsum verlaufenden, geschlossenen Klebstoffband und der innerhalb dieses Klebstoffbandes liegende mittlere Bereich mit wenigstens einem mehrfach unterbrochenen Klebstoffband versehen. Die Dachversteifung wird soweit gegen die Dachhaut gedrückt, bis das ringsum verlaufende, geschlossene Klebstoffband vollständig an der Dachhaut anliegt und abdichtet. Durch wenigstens ein innerhalb des vom geschlossenen Klebstoffband umgebenen Bereichs angeordnetes Loch wird ein Unterdruck zwischen der Dachversteifung und der Dachhaut erzeugt und aufrechterhalten, bis die Dachversteifung an der Dachhaut anliegt und der Klebstoff angezogen hat.

In der DE 40 35 822 wird ein Innenausstattungsteil für Fahrzeuge beschrieben, das aus einer formbildenden Schaumschicht, einer Polsterschicht, sowie einer Oberflächenschicht aus einer Kunststoffolie besteht. Die Polsterschicht wird entweder durch ein Textilvlies oder eine Beflockungsschicht gebildet. Außerdem sind in der DE 40 35 822 verschiedene Herstellverfahren für das Innenaustattungsteil für Fahrzeuge beschrieben. Unter anderem werden die Flocken auf die noch zähflüssige, durch Rotationssintern erzeugte Kunststoffolie aufgebracht.

Aus der EP 0 364 102 ist ein Dachhimmel für Fahrzeuge bestehend aus einer Trägerschicht aus Wellfaserpappe, aus einer verhältnismäßig harten bis mittelharten Schaumstoffschicht und einem dreischichtigen Laminat bekannt.

Das Laminat setzt sich aus einer undurchlässigen Trägerfolie, aus einer offenzelligen weichelastischen Schaumstoffschicht und aus einer Oberflächenschicht aus Textilstoff zusammen.

Zur Herstellung des Dachhimmels wird die Trägerschicht aus Wellfaserpappe in eine Negativform eines Ausformwerkzeugs gelegt. Daraufhin wird eine schaumstoffbildende Chemiekalie auf die Trägerschicht aufgetragen und mit dem dreischichtigen Laminat bedeckt. Beim Ausformen kommt es zum Verschäumen der schaumstoffbildenden Chemikalie, so daß der dabei entstehende Schaumstoff eine Schicht zwischen der Trägerschicht und der Trägerfolie des dreischichtigen Laminats darstellt.

Aus der EP 0 437 787 A1 ist ein Verfahren zur Herstellung von offenzelligen Polyurethan-Hartschaumstoffen und deren Verwendung zur Herstellung von Dachhimmeln bekannt. Hierzu wird eine Polyurethan-Hartschaumplatte, die zuvor aus einem Schaumblock geschnitten wurde, sandwichartig von zwei Glasvliesen umhüllt. Auf die Glasvliese wurde zuvor ein Klebstoff gesprüht, und zwar in einer Menge von etwa 120 g/m². Danach werden die Glasvliese zum einen mit einer Dekorfolie, Rückseite zum Glasvlies, und zum anderen mit einem Textilgewebe abgedeckt. Dieser Aufbau von fünf Schichten, ohne Berücksichtigung des Klebstoffs, wird in einem beheizten Werkzeug verformt.

Zellige PU-Formkörper und ihre Herstellung durch thermoplastische Verformung von Polyester-Polyurethan-Schaumstoffen werden in der EP 0 118 876 A2 offenbart.

Ein Verfahren zur Herstellung von flächigen Polyurethan-Formteilen unter Verwendung von wässrigen Isocyanat-Suspensionen zum Tränken der porösen Materialien wird in der EP 0 276 465 A2 offenbart.

Der Erfindung liegt die Aufgabe zugrunde, ein Verfahren zur Herstellung einer Dachversteifung für Fahrzeuge sowie eine nach dem Verfahren hergestellte Dachversteifung selbst dahingehend zu verbessern, daß eine weitere Gewichtsreduzierung und eine größere Formbeständigkeit erzielt wird.

Diese Aufgabe wird bei einem Verfahren zur Herstellung einer Dachversteifung für Fahrzeuge nach dem Oberbegriff des Anspruchs 1 durch die im Kennzeichen des Anspruchs 1 oder 2 angegebenen Merkmale gelöst und bei einer nach dem Verfahren hergestellten Dachversteifung durch die im Kennzeichen des Anspruchs 3 oder 7 bis 13 angegebenen Merkmale gelöst. Weiterbildungen und vorteilhafte Ausgestaltungen ergeben sich aus den Unteransprüchen.

Die Verwendung eines Schaummaterials, bei dem zunächst ein Block geschäumt und anschließend Platten konstanter Dicke aus diesem Block herausgeschnitten werden, ermöglicht die Verwendung eines Rohmaterials, das verfahrensbedingt mit geringerem Raumgewicht hergestellt werden kann, als beispielsweise ein sogenanntes Sandwichmaterial mit einem Bandschäumverfahren. Dadurch ergibt sich eine Gewichts- und Materialeinsparung und somit auch eine Reduzierung der Kosten. Gleichzeitig wird aber auch ein ein späteres Umformen erleichterndes mechanisches Verhalten erzielt, da beim Umformvorgang auf die endgültige Form noch keine Verbindung mit einer der Deckschichten besteht. Das Schaummaterial kann sich somit entlang einer neutralen Mittelfläche verformen, wobei dann die im Krümmungsbereich mehr zum Krümmungszentrum liegenden Zonen gestaucht werden, während die vom Krümmungszentrum abgewandten Zonen gedehnt werden. Nach der Verbindung mit den äußeren Deckschichten hat das fertige Material daher weniger das Bestreben, wieder in seine ursprüngliche ebene Form zurückzukehren.

Ein weiterer Vorteil besteht darin, daß die Deckschichten bei Verwendung von Kraftlinern keine wasserundurchlässige Beschichtung zur Schaumschicht hin benötigen. Beim Bandschaumverfahren war dies nämlich erforderlich, da wegen der Feuchtigkeit im Papier der Kraftliner die Gefahr einer Lunkerbildung in der Schaumschicht bestand. Der Verzicht auf diese wasserundurchlässige Schicht bewirkt eine weitere Material- und Kosteneinsparung. Da die wasserundurchlässige Schicht zwischen dem Kraftliner und der Schaumschicht beim Stand der Technik nur an demjenigen Kraftliner erforderlich war, der bereits bei Herstellung des Vorproduktes im Bandschaumverfahren benötigt wurde, ergab sich hier eine zusätzliche Asymmetrie, denn der später über einen Kleber befestigte Kraftliner konnte auf eine solche wasserundurchlässige Schicht verzichten. Bei der Erfindung entfällt von vorn herein diese Asymmetrie, so daß auch von daher die Voraussetzungen für ein symmetrisches mechanisches Verhalten gegeben sind.

Alternativ ist vorgesehen, daß die aus dem geschäumten Block herausgeschnittenen Platten konstanter Dicke nur einseitig mittels eines reaktiven Klebers mit einer Deckschicht beschichtet werden. Das auf diese Weise hergestellte, sogenannte Halbsandwichelement erhält seine endgültige Formgebung durch Verklebung der unbeschichteten Seite der Platte mit der Dachhaut.

Gegenüber dem zuvor genannten Sandwichelement entfallen eine Deckschicht und eine zwischen Schaumstoffschicht und Deckschicht befindliche Kleberschicht. Dadurch ergibt sich eine weitere signifikante Gewichts- und Materialeinsparung und somit auch eine Reduzierung der Kosten.

Die einseitig mit einer Deckschicht beschichtete Platte besitzt eine wesentlich geringere Steifigkeit als eine beidseitig mit Deckschichten fest verbundene Schaumstoffschicht.

Daraus ergibt sich, daß das Halbsandwichelement ohne vorherige Formgebung und ohne auftretende wesentliche Rückstellkraft an jede beliebige Dachhaut angepaßt werden kann.

Durch die Verbindung mit nur einer Deckschicht zeigt das fertige Halbsandwichelement kein Bestreben, in eine bestimmte Form überzugehen, so daß für den späteren Umformvorgang auf die endgültige Form ein erleichterndes mechanisches Verhalten erzielt wird.

Somit ist es bei diesem weitergebildeten Verfahren möglich, ein Formteil sowohl als planares Halbsandwichelement ohne Kontur als auch als vorgeformtes Halbsandwichelement mit Kontur herzustellen, ohne daß sich das positive mechanische Verhalten des Halbsandwichelements verändert.

Die Steifigkeit des Halbsandwichelements wird durch Verkleben mit der Dachhaut erreicht, wobei der Verbund von Dachhaut und Halbsandwichelement dann ein Sandwichelement bilden. Erst dadurch erhält das Halbsandwichelement seine endgültige Form.

Die mechanischen Eigenschaften des fertigen Verbundes aus Halbsandwichelement und Dachhaut entsprechen überraschenderweise denen einer nach einem Verfahren gemäß Anspruch 1 hergestellten, beidseitig mit Deckschichten fest verbundenen Schaumstoffschicht.

Die Anbringung des Halbsandwichelements an die Dachhaut kann nach herkömmlichen Verfahren erfolgen. Als besonders vorteilhaft hat sich die Anbringung gemäß des in der DE 196 32 054 beschriebenen Verfahrens herausgestellt.

Das Verfahren hat neben der Gewichtsreduzierung der Dachversteifung bei mindestens gleichbleibenden mechanischen Eigenschaften außerdem den Vorteil, daß aufwendige Werkzeuge zur Umformung und die damit verbundenen Kosten eingespart werden können.

Bei einer nach Anspruch 1 oder 2 hergestellten Dachversteifung ist das Material der geschäumten Platte jeweils ein halbharter Polyurethanschaum. Dieser läßt sich leichter besonders auf kleine Krümmungsradien umformen bzw. vorformen und besitzt eine geringere Rückstellkraft. Ferner ergeben sich Vorteile hinsichtlich des Gewichts des eingesetzten Materials und der Dämpfungseigenschaft für bestimmte Frequenzen im Fahrzeug.

Die jeweilige Deckschicht ist gemäß Anspruch 1 ein Kraftliner, bei dem Halbsandwichelement gemäß Anspruch 2 kann es auch Vlies sein. Diese Schicht kann auf hohe Zugfestigkeit und geringes Dehnungsverhalten ausgelegt werden. Dadurch ist die Formstabilität des mehrschichtigen Produktes gewährleistet. Bei einer nach Anspruch 2 hergestellten Dachversteifung läßt sich dadurch das Halbsandwichelement an unterschiedlich geformte Dachhäute anpassen, wobei die Formstabilität des Verbundes aus Dachhaut und Halbsandwichelement gewährleistet ist. Ferner besteht die Möglichkeit, die Deckschicht aus Vlies mit Fasermaterial, wie Glas- oder Karbonfasern zu armieren. Dadurch läßt sich auch bei geringer Schichtdicke die Zugfestigkeit und das Dehnungsverhalten weiter verbessern.

Die jeweilige Deckschicht kann außen mit Beschichtungen aus Polyolefinen versehen sein. Dies verhindert von außen ein Eindringen von Feuchtigkeit in die Kraftliner und das Schaummaterial oder über das grundsätzlich wasserdurchlässige Vlies in das Schaummaterial, so daß dessen mechanischen und physikalischen Eigenschaften über die Nutzungsdauer weitgehend konstant bleiben. Gemäß einer nach Anspruch 2 hergestellten Dachversteifung wird bei der zur Dachhaut weisenden, ohne Deckschicht versehenen Seite des Halbsandwichelements das Eindringen von Feuchtigkeit in das Schaummaterial außerdem durch die wasserundurchlässige Dachhaut erreicht, so daß auch hier die mechanischen und physikalischen Eigenschaften nicht beeinträchtigt werden.

Dadurch, daß nur außen Schichten aus Polyolefinen benötigt werden, können die nach innen weisenden Seiten der Deckschichten unmittelbar mit den Seiten der Schaumschicht verklebt werden, was zu einer besseren Haftung des Klebstoffs an der jeweiligen Deckschicht beiträgt. Bei einer nach Anspruch 2 hergestellten Dachversteifung können die nach innen weisende Seite der Deckschicht und die nach innen weisende Seite der Dachhaut unmittelbar mit den Seiten der Schaumschicht verklebt werden, was dementsprechend auch zu einer besseren Haftung des Klebstoffs an der Deckschicht und der Dachhaut beiträgt.

Bei der Klebeschicht zwischen Deckschicht und Schaumschicht kann es sich um Kleber aus einem PU-System, vornehmlich einem 1-K-PU-System handeln. Die Aktivierung des Klebers erfolgt üblicherweise durch Wasser, wodurch in vorteilhafter Weise erreicht wird, daß ein in den Kraftlinern eventuell enthaltener Anteil von Feuchtigkeit zur Aktivierung herangezogen wird und dadurch die Feuchtigkeit aus den Kraftlinern herausgezogen und im Kleber gebunden wird. Ferner härtet der Kleber erst unter Wärme aus, so daß der vor der Erwärmung stattfindende Umformvorgang noch bei offenem Kleber erfolgen kann und sich damit die einzelnen Schichten aufeinander gleitend und damit spannungslos an die Form anpassen können. Nach dem Aushärten besitzt der Verbund duroplastisches Verhalten, so daß also auch unter späterer Erwärmung beispielsweise durch Sonneneinstrahlung keine Rückverformung mehr stattfinden kann. Der gewählte 1-K-PU-Kleber gewährleistet zudem eine geringe Schadstoffemission im Innenraum des Fahrzeugs.

Vorzugsweise weist die Platte aus geschäumtem Material eine Dicke zwischen 5 mm und 10 mm auf. Da das Material aus einem Block heraus geschnitten wurde, besteht hier ein völlig homogener Aufbau, so daß die durch den Schaum bewirkten akustischen und thermischen Dämpfungseigenschaften über die gesamte Dicke des Materials homogen verteilt sind und damit auch eine verhältnismäßig geringe Dicke optimal genutzt werden kann.

Die Platte aus geschäumtem Material besitzt ein Raumgewicht zwischen 20 kg/m³ und 30 kg/m³. Dieser geringe Gewichtsbereich wird erst durch das Herstellungsverfahren des Schaummaterials ermöglicht, das zunächst als Block geschäumt ist. Demgegenüber liegt die Untergrenze des Raumgewichts bei einem Bandschäumverfahren bei etwa 38 kg/m³. Dieser Wert kann bei der Erfindung also deutlich unterschritten werden.

Die jeweils verwendete Deckschicht kann ein Flächengewicht zwischen 160 g/m² und 200 g/m² aufweisen. Vorzugsweise beträgt das Flächengewicht bei Verwendung von Kraftlinern 186 g/m². Mit diesem Flächengewicht ist sichergestellt, daß die jeweilige Deckschicht, die auch wesentlich zur Steifigkeit des fertigen Materials in Verbindung mit der Schaumschicht beiträgt, eine ausreichende Stabilität besitzt.

Die wasserundurchlässige äußere Beschichtung aus Polyolefinen kann ein Flächengewicht zwischen 10 g/m² und 30 g/m² aufweisen. Vorzugsweise liegt der Wert bei 20 g/m². Hierdurch wird eine ausreichende Sperre gegen Feuchtigkeit von außen erreicht.

Weiterhin kann die Klebeschicht aus dem reaktiven Kleber ein Flächengewicht zwischen 20 g/m² und 40 g/m² aufweisen. Dieses im Vergleich zum Stand der Technik geringere Gewicht des einzusetzenden Klebers wird durch das geringere Rückstellverhalten des Schaummaterials ermöglicht.

Nachfolgend wird die Erfindung anhand der Zeichnung erläutert. In der Zeichnung zeigen:
- Fig. 1: einen Querschnitt durch einen Dachaufbau mit der nach einem Verfahren gemäß Anspruch 1 oder 2 hergestellten Dachversteifung
- Fig. 2: eine prinzipielle Darstellung des Schichtaufbaus einer nach einem Verfahren gemäß Anspruch 1 hergestellten Dachversteifung und
- Fig. 3: eine prinzipielle Darstellung des Schichtaufbaus einer nach einem Verfahren gemäß Anspruch 2 hergestellten Dachversteifung und einer Dachhaut.

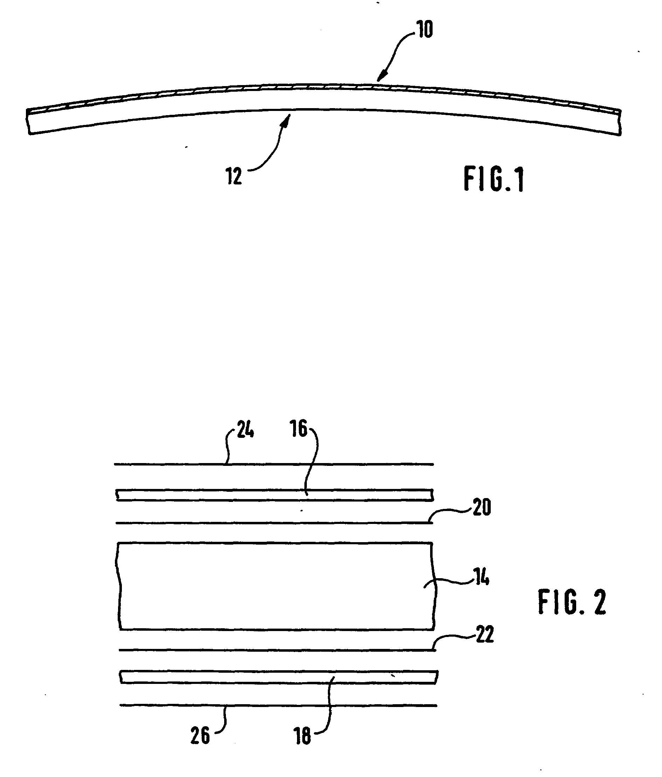

Fig. 1 zeigt einen Querschnitt durch einen Dachaufbau mit der erfindungsgemäßen Dachversteifung. Das Dach besteht dabei aus einem außenliegenden Dachhaut 10, die in ihrer Form von der Karosserieform vorgegeben ist, und der zum Fahreuginnenraum weisenden Dachversteifung 12. Die Dachversteifung ist in ihrer Form an die Form des Daches angepaßt und mit diesem ganz- oder teilflächig verbunden, vorzugsweise verklebt.

Fig. 2 zeigt eine prinzipielle Darstellung des Schichtaufbaus einer nach einem Verfahren gemäß Anspruch 1 hergestellten Dachversteifung. Zur besseren Übersicht sind die Schichten getrennt gezeichnet. In Wirklichkeit schließen sie sich natürlich bündig aneinander an.

Die in Fig. 2 dargestellte Dachversteifung 12 besteht aus einer inneren Platte 14 aus Polyurethanschaum und zwei Deckschichten 16, 18, die über Klebeschichten 20, 22 mit der Platte 14 aus Polyurethanschaum verklebt sind. Auf den der Platte 14 aus Polyurethanschaum abgewandten Seiten der Deckschichten 16, 18 sind diese mit wasserundurchlässigen Beschichtungen 24, 26 ausgestattet.

Bei der Herstellung wird zunächst ein Block aus Polyurethanschaum mit einem Raumgewicht zwischen 20 kg/m³ und 35 kg/m³ geschäumt und anschließend in Platten 14 mit einer Dicke zwischen 5 mm und 10 mm geschnitten. Die Platten 14 werden dann beidseitig mit einem reaktiven Kleber 20, 22, vornehmlich auf Basis eines 1-K-PU-Systems beschichtet. Das Flächengewicht des Klebers 20, 22 liegt hier zwischen 20 g/m² und 40 g/m².

Danach werden die Deckenschichten 16, 18 aufgelegt, die hier aus Kraftlinern bestehen. Die Kraftliner selbst umfassen Zellpapier, das wasserfest verleimt ist. Die Deckschichten 16, 18 sind einseitig, und zwar auf der bezogen auf die Schaumschicht außenliegenden Seite mit Polyolefinen 24, 26 beschichtet. Es wäre allerdings auch möglich, sie beidseitig zu beschichten.

Der Verbund wird anschließend in einem beheizten Werkzeug, welches die Kontur des Formteils bestimmt, verpreßt. In dem Formteil gleiten während des Umformvorgangs die aneinandergrenzenden Flächen der Deckschichten 16, 18 und der Schaumplatte 14 spannungsfrei aufeinander, da ja zunächst der Kleber 20, 22 noch offen ist. Durch die Beheizung reagiert der Kleber 20, 22 dann und härtet aus. Der Verbund wird nach dem Aushärten des Klebers 20, 22 aus dem Werkzeug entnommen und gibt die Werkzeugkontur wieder. Diese entspricht der Dachform, in die die Dachversteifung 12 eingebracht wird.

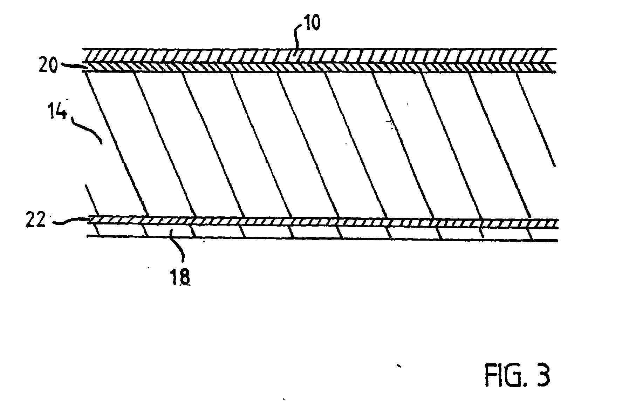

Fig. 3 zeigt eine prinzipielle Darstellung des Schichtaufbaus einer nach einem Verfahren gemäß Anspruch 2 hergestellten Dachversteifung 12 und einer Dachhaut 10.

Die in Fig. 3 dargestellte Dachversteifung 12 besteht aus einer Platte 14 aus Polyurethanschaum und einer Deckschicht 18, die mit der Platte 14 aus Polyurethanschaum mittels einer Klebeschicht 22 verbunden ist.

Bei der Herstellung wird zunächst ein Block aus Polyurethanschaum mit einem Raumgewicht zwischen 20 kg/m³ und 35 kg/m³ geschäumt und anschließend in Platten 14 mit einer Dicke zwischen 5 mm und 10 mm geschnitten. Die Platten 14 werden dann einseitig mit einem reaktiven Kleber 22, vornehmlich auf Basis eines 1-K-PU-Systems beschichtet. Das Flächengewicht des Klebers 22 liegt hier zwischen 20 g/m² und 40 g/m².

Danach wird die Deckschicht 18 aufgelegt, die hier aus einem Kraftliner besteht. Die Kraftliner selbst umfaßt Zellpapier, das wasserfest verleimt ist. Die Deckschicht 18 ist einseitig, und zwar auf der bezogen auf die Schaumschicht 14 außenliegenden Seite mit Polyolefinen beschichtet. Es wäre allerdings auch möglich, sie beidseitig zu beschichten. Diese Beschichtungen sind der Übersicht halber in der Zeichnung nicht dargestellt.

Dieses sogenannte Halbsandwichelement 12 ist an die Form des Daches 10 angepaßt und mit diesem ganz- oder teilflächig verbunden, vorzugsweise über eine Klebeschicht 20 mit diesem verklebt.

Die einseitig mit einer Deckschicht 18 beschichtete Platte 14 läßt sich wegen ihrer wesentlich geringen Steifigkeit ohne vorherige Formgebung an jedes beliebige Dachhaut 10 anpassen und in die endgültige Form bringen. Die Steifigkeit der Dachversteifung 12 wird durch Verkleben der unbeschichteten Seite mit der Dachhaut 10 erreicht, wobei der Verbund von Dachhaut 10 und Dachversteifung 12 dann ein Sandwichelement bildet.

Die mechanischen Eigenschaften des fertigen Verbundes aus Halbsandwichelement 12 und Dachhaut 10 entsprechen überraschenderweise denen einer beidseitig mit Deckschichten fest verbundenen Schaumstoffschicht.

## Patentansprüche

1. Verfahren zur Herstellung einer Dachversteifung für Fahrzeuge, bestehend aus der Dachhaut (10) des Fahrzeugs selbst und einer mit äußeren Deckschichten versehenen mittleren Schaumschicht (14), die von innen an die Dachhaut (10) anbringbar ist, **dadurch gekennzeichnet, dass** aus einem Block aus halbhartem Polyurethanschaum Platten (14) konstanter Dicke geschnitten werden, jede Platte (14) beidseitig mit einem reaktiven Kleber (20, 22) beschichtet wird, anschließend Kraftliner als Deckschichten (16, 18) jeweils auf beide Seiten der Platte (14) aufgelegt werden und schließlich der Verbund in einem beheizten Werkzeug, welches die Kontur des Formteils bestimmt, verpresst wird, wobei der reaktive Kleber (20, 22) unter dem Einfluss der Wärme ausgehärtet wird.

2. Verfahren nach dem Oberbegriff des Anspruchs 1, **dadurch gekennzeichnet,dass** aus einem Block aus geschäumten Material Platten (14) konstanter Dicke geschnitten werden, jede Platte (14) einseitig mit einem reaktiven Kleber (22) beschichtet wird, daraufhin eine Deckschicht (18) auf die kleberbeschichtete Seite der Platte (14) aufgelegt wird, anschließend der Verbund in einem beheizten Werkzeug zu einem Formteil ohne oder mit Kontur verpresst wird, und schließlich die endgültige Formgebung des Formteils durch Verklebung der unbeschichteten Seite der Platte (14) mit der Dachhaut (10), die quasi eine weitere Deckschicht bildet, erhalten wird.

3. Nach Anspruch 2 hergestellte Dachversteifung (12), **dadurch gekennzeichnet, dass** das Material der geschäumten Platte (14) ein halbharter Polyurethanschaum ist.

4. Dachversteifung nach Anspruch 3, **dadurch gekennzeichnet, dass** die Deckschicht (18) ein Kraftliner oder Vlies ist.

5. Dachversteifung nach Anspruch 3 oder 4, **dadurch gekennzeichnet, dass** die Deckschicht (18) mit Fasermaterial, wie Glas- oder Karbonfasern armiert ist.

6. Dachversteifung nach einem der Ansprüche 3 bis 5, **dadurch gekennzeichnet, dass** die Deckschicht (18) außen mit einer Beschichtung (26) aus Polyolefinen versehen ist.

7. Nach Anspruch 1 hergestellte Dachversteifung, **dadurch gekennzeichnet, dass** die Deckschicht (16, 18) außen mit Beschichtungen (24, 26) aus Polyolefinen versehen ist.

8. Dachversteifung nach dem Oberbegriff des Anspruchs 7 oder nach einem der Ansprüche 3 bis 7, **dadurch gekennzeichnet, dass** die Klebeschicht (20, 22) einen Kleber aus einem PU-System, vornehmlich einem 1-K-PU-System umfasst.

9. Dachversteifung nach dem Oberbegriff des Anspruchs 7 oder nach einem der Ansprüche 3 bis 8, **dadurch gekennzeichnet, dass** die Platte (14) aus geschäumtem Material eine Dicke zwischen 5 mm und 10 mm aufweist.

10. Dachversteifung nach dem Oberbegriff des Anspruchs 7 oder nach einem der Ansprüche 3 bis 9, **dadurch gekennzeichnet, dass** die Platte (14) aus geschäumtem Material ein Raumgewicht zwischen 20 kg/m³ und 35 kg/m³ aufweist.

11. Dachversteifung nach dem Oberbegriff des Anspruchs 7 oder nach einem der Ansprüche 3 bis 10, **dadurch gekennzeichnet, dass** die Deckschicht (16, 18) ein Flächengewicht zwischen 160 g/m² und 200 g/m², vorzugsweise 186 g/m², aufweist.

12. Dachversteifung nach dem Oberbegriff des Anspruchs 7 oder nach einem der Ansprüche 3 bis 11, **dadurch gekennzeichnet, dass** die äußere Beschichtung (24, 26) ein Flächengewicht zwischen 10 g/m² und 30 g/m², vorzugsweise 20 g/m² aufweist.

13. Dachversteifung nach dem Oberbegriff des Anspruchs 7 oder nach einem der Ansprüche 3 bis 12, **dadurch gekennzeichnet, dass** die Klebeschicht (20, 24) ein Flächengewicht zwischen 20 g/m² und 40 g/m² aufweist.

## Claims

1. Method for producing a roof stiffener for vehicles, consisting of the roof skin (10) of the vehicle itself and a central foam layer (14) which is provided with outer cover layers and can be attached to the roof skin (10) from the inside, **characterised in that** panels (14) of constant thickness are cut from a block of semi-hard polyurethane foam, each panel (14) is coated on both sides with a reactive adhesive (20, 22), then Kraft paperboard is applied as cover layers (16, 18) to both sides of the panel (14), and finally the assembly is pressed in a heated mould which determines the contour of the shaped part, wherein the reactive adhesive (20, 22) is cured under the effect of the heat.

2. Method according to the preamble of claim 1, **characterised in that** panels (14) of constant thickness are cut from a block of foamed material, each panel (14) is coated on one side with a reactive adhesive (22), then a cover layer (18) is applied to the adhesive-coated side of the panel (14), then the assembly is pressed in a heated mould to form a shaped part with or without a contour, and finally the final shape of the shaped part is obtained by adhesively bonding the uncoated side of the panel (14) to the roof skin (10), which forms as it were a further cover layer.

3. Roof stiffener (12) produced according to claim 2, **characterised in that** the material of the foamed panel (14) is a semi-hard polyurethane foam.

4. Roof stiffener according to claim 3, **characterised in that** the cover layer (18) is Kraft paperboard or a nonwoven.

5. Roof stiffener according to claim 3 or 4, **characterised in that** the cover layer (18) is reinforced with fibre material, such as glass or carbon fibres.

6. Roof stiffener according to one of claims 3 to 5, **characterised in that** the cover layer (18) is provided with a coating (26) of polyolefins on the outer side.

7. Roof stiffener produced according to claim 1, **characterised in that** the cover layer (16, 18) is provided with coatings (24, 26) of polyolefins on the outer side.

8. Roof stiffener according to the preamble of claim 7 or according to one of claims 3 to 7, **characterised in that** the adhesive layer (20, 22) comprises an adhesive consisting of a PU system, especially a one-component PU system.

9. Roof stiffener according to the preamble of claim 7 or according to one of claims 3 to 8, **characterised in that** the panel (14) of foamed material has a thickness of between 5 mm and 10 mm.

10. Roof stiffener according to the preamble of claim 7 or according to one of claims 3 to 9, **characterised in that** the panel (14) of foamed material has a weight per unit volume of between 20 kg/m³ and 35 kg/m³.

11. Roof stiffener according to the preamble of claim 7 or according to one of claims 3 to 10, **characterised in that** the cover layer (16, 18) has a weight per unit area of between 160 g/m² and 200 g/m², preferably 186 g/m².

12. Roof stiffener according to the preamble of claim 7 or according to one of claims 3 to 11, **characterised in that** the outer coating (24, 26) has a weight per unit area of between 10 g/m² and 30 g/m², preferably 20 g/m².

13. Roof stiffener according to the preamble of claim 7 or according to one of claims 3 to 12, **characterised in that** the adhesive layer (20, 24) has a weight per unit area of between 20 g/m² and 40 g/m².

## Revendications

1. Procédé de fabrication d'un renfort de pavillon de véhicule comprenant le toit (10) du véhicule lui-même et une couche expansée (14) centrale, qui est pourvue de couches de recouvrement extérieures et qui peut être fixée au toit (10), **caractérisé en ce que** des plaques d'épaisseur constante sont découpées dans un bloc de polyuréthane expansé mi-dur (14), que chaque plaque est enduite sur ses deux faces d'une colle réactive (20, 22), que des feuilles de papier Kraft sont posées ensuite sur chaque face de la plaque (14) comme couches de couverture (16, 18), et qu'enfin le composite est compressé dans un outil chauffé, qui détermine le contour du préformé, la colle réactive (20, 22) étant durcie sous l'influence de la chaleur.

2. Procédé suivant le préambule de la revendication 1, **caractérisé en ce que** des plaques (14) d'épaisseur constante sont découpées dans un bloc de matière expansée, chaque plaque (14) étant enduite d'une colle réactive (22) sur une face, après quoi une couche de recouvrement (18) est posée sur la face enduite de colle de la plaque (14), le composite étant ensuite compressé dans un outil chauffé de telle sorte qu'une pièce moulée sans ou avec contours soit obtenue et que la pièce moulée reçoive sa conformation définitive par collage de la face non enduite de la plaque (14) avec le toit du véhicule (10), qui forme pratiquement une autre couche de recouvrement.

3. Renfort de pavillon (12) fabriqué suivant la revendication 2, **caractérisé en ce que** la matière de la plaque expansée (14) est une mousse de polyuréthane mi-dure.

4. Renfort de pavillon suivant la revendication 3, **caractérisé en ce que** la couche de recouvrement (18) est un liner de papier Kraft ou un non-tissé.

5. Renfort de pavillon suivant la revendication 3 ou 4, **caractérisé en ce que** la couche de recouvrement (18) est armée d'une matière de fibres, telles que des fibres de verre ou des fibres de carbone.

6. Renfort de pavillon suivant une des revendications 3 à 5, **caractérisé en ce qu'**à l'extérieur, la couche de recouvrement (18) est pourvue d'une enduction (26) en polyoléfines.

7. Renfort de pavillon fabriqué suivant la revendication 1, **caractérisé en ce que** la couche de recouvrement (16, 18) est pourvue, à l'extérieur, d'enductions en polyoléfines.

8. Renfort de pavillon suivant le préambule de la revendication 7 ou suivant une des revendications 3 à 7, **caractérisé en ce que** la couche de colle (20, 22) comprend une colle à base d'un système PU, de préférence à base d'un système 1-K-PU.

9. Renfort de pavillon suivant le préambule de la revendication 7 ou suivant une des revendications 3 à 8, **caractérisé en ce que** la plaque (14) en matière expansée présente une épaisseur comprise entre 5 et 10 mm.

10. Renfort de pavillon suivant le préambule de la revendication 7 ou suivant une des revendications 3 à 9, **caractérisé en ce que** la plaque (14) en matière expansée présente un poids spécifique compris entre 20 kg/m³ et 35 kg/m³.

11. Renfort de pavillon suivant le préambule de la revendication 7 ou suivant une des revendications 3 à 10, **caractérisé en ce que** la couche de recouvrement (16, 18) présente un grammage compris entre 160 g/m² et 200 g/m², de préférence de 186 g/m².

12. Renfort de pavillon suivant le préambule de la revendication 7 ou suivant une des revendications 3 à 11, **caractérisé en ce que** l'enduction extérieure (24, 26) présente un grammage compris entre 10 g/m² et 30 g/m², de préférence de 20 g/m².

13. Renfort de pavillon suivant le préambule de la revendication 7 ou suivant une des revendications 3 à 12, **caractérisé en ce que** la couche de colle (20, 24) présente un grammage compris entre 20g/m² et 40 g/m².
